(19) Europäisches Patentamt
European Patent Office
Office européen des brevets

(11) Numéro de publication: **0 102 882**
**B1**

(12) # FASCICULE DE BREVET EUROPEEN

(45) Date de publication du fascicule du brevet: **02.04.86**

(51) Int. Cl.$^4$: **C 01 G 15/00**, C 22 B 58/00, C 22 B 3/00

(21) Numéro de dépôt: **83401586.9**

(22) Date de dépôt: **01.08.83**

(54) **Procédé d'extraction du gallium à l'aide d'hydroxyquinoléines substituées et de composés organophosphorés.**

(30) Priorité: **26.08.82 FR 8214630**

(43) Date de publication de la demande: **14.03.84 Bulletin 84/11**

(45) Mention de la délivrance du brevet: **02.04.86 Bulletin 86/14**

(84) Etats contractants désignés: **CH DE FR GB IT LI**

(56) Documents cités:
**EP-A-0 000 457**
**EP-A-0 002 970**
**EP-A-0 021 990**
**DE-A-3 005 157**
**FR-A-2 277 897**
**FR-A-2 365 641**
**US-A-3 151 946**

(73) Titulaire: **RHONE-POULENC SPECIALITES CHIMIQUES, "Les Miroirs" 18, Avenue d'Alsace, F-92400 Courbevoie (FR)**

(72) Inventeur: **Bauer, Denise, 8bis allée de la Fontaine, F-93460 Le Raincy (FR)**
Inventeur: **Fourre, Patrick, 27 avenue d'Italie, F-75013 Paris (FR)**
Inventeur: **Sabot, Jean-Louis, 1 Quater avenue Lesage, F-78600 Maisons Laffitte (FR)**

(74) Mandataire: **Dutruc-Rosset, Marie-Claude et al, RHONE POULENC RECHERCHES Service Brevets Chimie et Polymères 25, Quai Paul Doumer, F-92408 Courbevoie Cedex (FR)**

EP 0 102 882 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un procédé d'extraction liquide/liquide du gallium contenu dans des solutions aqueuses basiques à l'aide d'hydroxyquinoléines substituées et de composés organophosphorés.

On sait d'après le brevet européen N° 2970 au nom de la titulaire que le gallium présent dans des solutions aqueuses alcalines peut être extrait dans des conditions cinétiques améliorées au moyen d'une phase organique contenant des hydroxyquinoléines substituées et des composés organiques comportant au moins une fonction acide carboxylique.

Poursuivant ses recherches, la titulaire a découvert que d'autres composés que ceux comportant au moins une fonction acide carboxylique pouvaient également améliorer la vitesse d'extraction du gallium des solutions aqueuses basiques, sans altérer les excellents taux d'extraction de celui-ci.

La présente invention concerne un procédé d'extraction liquide/liquide du gallium contenu dans des solutions aqueuses basiques par mise en contact de la solution aqueuse avec une phase organique contenant principalement un solvant organique, au moins une hydroxyquinolénine substituée, caractérisé en ce que la phase organique contient en outre au moins un composé organophosphoré comportant au moins une fonction acide.

Les solutions aqueuses basiques, traitées selon le procédé de l'invention, sont celles dans lesquelles la concentration en $OH^-$ peut aller jusqu'à 13-14 ions g/l. Ainsi, le procédé de l'invention est particulièrement intéressant pour extraire le gallium contenu dans les lessives d'aluminate de sodium du procédé Bayer de fabrication de l'alumine. La composition de ces lessives correspond, généralement, à des teneurs en $Na_2O$ comprises entre 100 et 400 g/l et en $Al_2O_3$ de 40 à 150 g/l, les lessives dites d'attaque correspondant, généralement, à des teneurs en $Na_2O$ voisines de 300 g/l et en $Al_2O_3$ de 150 g/l, les lessives dites de décomposition à des teneurs comprises entre 150 et 200 g/l pour $Na_2O$ et entre 70 et 100 g/l pour $Al_2O_3$.

Les solvants organiques que l'on met en œuvre selon l'invention sont des diluants utilisés en extraction liquide/liquide; ils peuvent être utilisés seuls ou en mélange. Parmi ceux-ci, on peut citer les hydrocarbures aliphatiques, par exemple l'heptane et les coupes pétrolières du type kérosène; les hydrocarbures aromatiques, par exemple le benzène, le toluène, le xylène et les coupes aromatiques du type Solvesso (marque déposée par la société Exxon) et, enfin, les dérivés halogénés de ces composés, par exemple le chloroforme, le tétrachlorure de carbone, le dichloroéthane et le trichloropropane.

Les hydroxyquinoléines substituées selon l'invention sont celles pouvant extraire le gallium par complexation dans les conditions de l'invention; elles doivent, de plus, dans ces conditions, être plus solubles dans la phase organique que dans la phase aqueuse.

Les hydroxyquinoléines substituées convenant aux fins de l'invention sont notamment celles de formule générale:

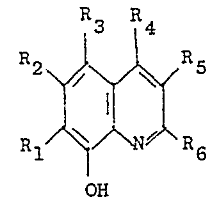

dans laquelle $R_1$, $R_2$, $R_3$, $R_4$, $R_5$, $R_6$, identiques ou différents, sont choisis parmi le groupe constitué par l'hydrogène, les halogènes, les radicaux alkyle, alcényle, alicyclique, aryle, $R_1$, $R_2$, $R_3$, $R_4$, $R_5$, $R_6$ ne pouvant représenter simultanément H.

Parmi ces hydroxyquinoléines substituées, celles convenant particulièrement bien aux fins de l'invention sont notamment les α-alcénylhydroxy-8 quinoléines, les β-alcénylhydroxy-8 quinoléines et les alkylhydroxy-8 quinoléines.

Les α-alcénylhydroxy-8 quinoléines préférées selon l'invention ont pour formule générale:

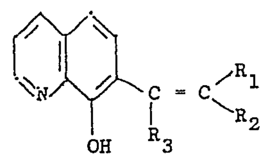

dans laquelle $R_1$, $R_2$, $R_3$ représentent un hydrogène ou un groupement hydrocarboné contenant 1 à 12 atomes de carbone. Parmi celles-ci, on utilisera notamment celles de formule générale:

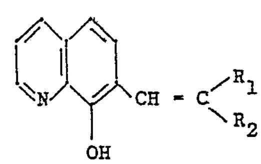

ou

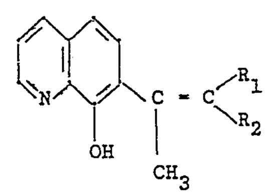

Les β-alcénylhydroxy-8 quinoléines préférées selon l'invention ont pour formule générale:

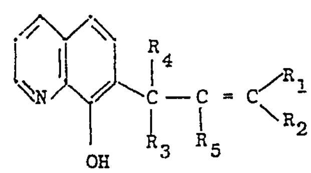

dans laquelle $R_1$, $R_2$, $R_3$, $R_4$, $R_5$ représentent un hydrogène ou un groupement hydrocarboné contenant 1 à 12 atomes de carbone.

Les alkylhydroxy-8 quinoléines préférées selon l'invention ont pour formule:

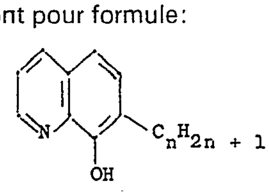

dans laquelle n est compris entre 1 et 20, et, de préférence, entre 5 et 15.

Ces hydroxyquinoléines peuvent être mises en œuvre selon l'invention seules ou en mélange.

La proportion en hydroxyquinoléine substituée dans la phase organique n'est pas critique et peut varier dans de larges limites. Toutefois, une proportion comprise entre 1 et 50% en volume rapportée à la phase organique convient généralement, une proportion comprise entre 6 et 12% étant économiquement favorable.

Les composés organophosphorés que l'on peut mettre en œuvre selon l'invention sont représentés par les formules générales suivantes:

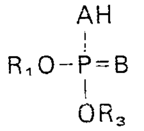 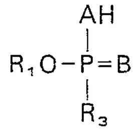 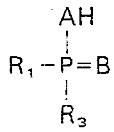

dans lesquelles $R_3$ représente $R_2$ ou l'hydrogène, et $R_1$ et $R_2$ sont des radicaux alkyles, alcényles, alicycliques, aryles ou alkylaryles comportant de 1 à 20 atomes de carbone et de préférence entre 5 et 15.

A et B, qui peuvent être identiques ou différents, représentent un atome d'oxygène ou de soufre.

Parmi ces composés organophosphorés, on peut ainsi employer les monoesters ou les diesters, ou les mélanges de monoesters et de diesters des acides phosphoriques, phosphoniques ou phosphiniques ainsi que des acides thiophosphoriques, thiophosphoniques et thiophosphiniques.

Parmi ces composés, on peut citer également l'acide diéthyl-2-hexylphosphorique (HDEHP), l'acide tridécylphosphorique, l'acide éthyl-2-hexyléthyl-2-hexylphosphonique (HEMEHP) (vendu dans le commerce sous la marque PC 88A), l'acide dioctylphosphinique (HDOP) (vendu dans le commerce sous la marque Cyanex 272), l'acide diéthyl-2-hexyldithiophosphorique (HDEHDTP), l'acide dioctyldithiophosphinique (HDODTP).

Ces composés peuvent être utilisés seuls ou en mélange. Ils doivent, de plus, dans les conditions de mise en œuvre de l'invention, être plus solubles dans la phase organique que dans la phase aqueuse.

La proportion de composé organophosphoré dans la phase organique n'est pas critique, et peut varier dans de larges limites. Toutefois, une proportion inférieure à 20% en volume rapportée à la phase organique convient généralement, une proportion comprise entre 0 (exclu) et 10% étant favorable économiquement.

Ainsi qu'il est bien connu dans le domaine de l'extraction liquide/liquide, il peut être avantageux d'ajouter dans la phase organique, selon le procédé de l'invention, divers agents modificateurs. Parmi ceux-ci, on peut citer les corps à fonction alcool, en particulier les alcools lourds dont le nombre d'atomes de carbone est compris entre 4 et 15, et les phénols lourds ainsi que divers autres composés solvatants, tels que certains esters phosphoriques comme le tributylphosphate, les oxydes de phosphine et les sulfoxydes.

La température de mise en œuvre de l'invention n'est pas un facteur critique. C'est même un des avantages procuré par le procédé de l'invention par rapport à la technique antérieure que de permettre d'opérer l'extraction à n'importe quelle température. Ainsi, généralement, une température d'extraction comprise entre 10 et 50°C permet d'obtenir des taux d'extraction du gallium très satisfaisante.

La nature de l'atmosphère dans laquelle est mis en œuvre le procédé de l'invention n'est pas critique. Toutefois, si l'on veut éviter une certaine dégradation de l'agent d'extraction par oxydation au cours du temps, il est avantageux, selon le procédé de l'invention, d'opérer l'extraction en atmosphère inerte, l'atmosphère inerte pouvant être constituée en particulier par une atmosphère d'argon ou d'azote.

Le procédé de l'invention permet la récupération du gallium de solutions aqueuses basiques lorsque l'étape d'extraction proprement dite est suivie d'une étape de régénération de la phase organique au moyen d'acides forts. Ainsi, la présente invention concerne également un procédé d'extraction liquide/liquide du gallium contenu dans des solutions aqueuses basiques par mise en contact de la solution aqueuse avec une phase organique contenant principalement un solvant organique, au moins une hydroxyquinoléine substituée et au moins un composé organophosphoré caractérisé en ce que que, en outre, on opère la séparation de la phase organique de la phase aqueuse, qu'au moins une fois, d'une part, on met en contact la phase organique avec une solution d'acide fort et, d'autre part, on sépare la phase organique restante de la phase aqueuse. Les acides forts que l'on peut mettre en œuvre sont, de préférence, choisis parmi le groupe comprenant l'acide chlorhydrique, l'acide sulfurique, l'acide nitrique, l'acide bromhydrique et l'acide perchlorique.

Dans le cas particulier où la solution aqueuse basique est une lessive d'aluminate de sodium du procédé Bayer de fabrication de l'alumine, il s'avère qu'une certaine quantité d'aluminium et de sodium transfère notamment, en plus du gallium de la lessive dans la phase organique au cours de l'étape d'extraction selon l'invention. L'étape de régénération subséquente permet alors, notamment selon différentes variantes, de récupérer un gallium plus ou moins purifié.

Selon une première variante, après avoir séparé la phase organique de la phase aqueuse, on met en contact la phase organique avec une solution d'acide fort, on sépare la phase aqueuse de la phase organique et on récupère le gallium de la phase aqueuse. La concentration de la solution acide utilisée dépend en particulier de la proportion d'hydroxyquinoléine substituée mise en œuvre dans la phase organique. Pour les proportions préférées d'hydroxyquinoléine, lorsque l'on met en œuvre des solutions d'acide sulfurique ou nitrique ou perchlorique, leur concentration doit, de préférence, être supérieure à 1,2M; lorsqu'on met en œuvre des solutions d'acide chlorhydrique ou bromhydrique, leur concentration doit, de préférence, être comprise entre 1,2 et 2,2M.

Selon une deuxième variante, après avoir séparé la phase organique de la phase aqueuse, on met en contact la phase organique avec une première solution aqueuse diluée d'un acide pour transférer le sodium et l'aluminium de la phase organique dans la phase aqueuse, le gallium restant dans la phase organique, et, après séparation des phases organique et aqueuse, on met en contact la phase organique restante avec une deuxième solution aqueuse d'acide plus concentrée afin de transférer le gallium de la phase organique dans la phase aqueuse, le gallium étant ensuite séparé de la phase aqueuse. La concentration des solutions acides utilisées dépend, en particulier, de la proportion d'hydroxyquinoléine substituée mise en œuvre dans la phase organique. Pour les proportions préférées d'hydroxyquinoléine, la concentration de la première solution aqueuse d'acide est, de préférence, comprise entre 0,2 et 0,7M; celle de la deuxième solution étant, de préférence, supérieure à 1,2M, lorsque l'on met en œuvre des solutions d'acide sulfurique ou nitrique ou perchlorique et, de préférence, comprise entre 1,2 et 2,2M, lorsque l'on met en œuvre des solutions d'acide chlorhydrique ou bromhydrique.

Selon une troisième variante, après avoir séparé la phase organique de la phase aqueuse, on met en contact la phase organique avec une première solution aqueuse concentrée d'un acide capable de complexer le gallium sous forme anionique, le gallium restant en solution dans la phase organique tandis que le sodium et l'aluminium passent dans la phase aqueuse, après séparation des phases organique et aqueuse, on met en contact la phase organique restante avec une deuxième solution aqueuse diluée d'acide afin de transférer le gallium de la phase organique dans la phase aqueuse, le gallium étant ensuite séparé de la phase aqueuse; les acides mis en œuvre dans cette troisième variante sont, de préférence, les acides chlorhydrique ou bromhydrique. La concentration des solutions acides utilisées dépend en particulier de la proportion d'hydroxyquinoléine substituée mise en œuvre dans la phase organique. Pour les proportions préférées d'hydroxyquinoléine, la concentration de la première solution est, de préférence, comprise entre 4 et 8M et celle de la deuxième solution comprise entre 1,2 et 2,2M.

Le procédé selon la présente invention peut être mis en œuvre dans les dispositifs industriels classiques utilisés en extraction liquide/liquide. La présente invention permet notamment par rapport au procédé traditionnel de réduire la taille des réacteurs de mélange dans des proportions très appréciables en bénéficiant d'un gain de productivité important; il est ainsi possible, en particulier avec un système d'extraction multiétages d'encombrement réduit fonctionnant à contre-courant, de réaliser l'extraction quasi totale du gallium de solutions aqueuses basiques.

D'autres avantages de l'invention apparaîtront à la lecture des exemples qui vont suivre; ces derniers ne sauraient, en aucune façon, être considérés comme limitant l'invention.

*Exemple 1:*

Une lessive Bayer de composition $Al_2O_3$: 80 g/l; $Na_2O$: 205 g/l; Ga: 225 mg/l est agitée à 25°C avec un volume égal d'une phase organique ayant la composition en volume suivante:

- hydroxyquinoléine A: 8%
- n-décanol: 10%
- HDEHP (acide diéthyl-2-hexylphosphorique): x%
- kérosène: (82−x)%

Après séparation des phases, le taux d'extraction du gallium obtenu est donné dans le tableau 1 en fonction du temps de mélange et de la proportion x de HDEHP mise en œuvre.

*Tableau 1*

*Taux d'extraction de gallium (%)*

| Composition de la phase organique | Temps de mélange (min) | | | | |
|---|---|---|---|---|---|
| | 2 | 5 | 10 | 20 | 30 |
| x= 0 | 1 | 2 | 4 | 8 | 23 |
| x= 3 | 5 | 10 | 22 | 42 | 60 |
| x= 6 | 10 | 20 | 35 | 60 | 80 |
| x=10 | 19 | 36 | 59 | 82 | 89 |

Les résultats consignés dans ce tableau montrent l'accroissement considérable de la vitesse d'extraction du gallium procuré par le procédé selon l'invention mettant en œuvre un composé organophosphoré par rapport au procédé traditionnel correspondant à x = 0.

A est une β-alcénylhydroxy-8 quinoléine de formule:

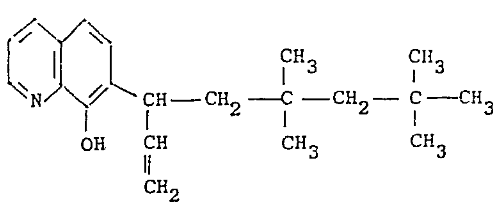

C'est le composé actif du produit vendu par la société Schering sous la marque Kelex 100.

*Exemple 2:*

Une lessive Bayer de même composition que celle donnée dans l'exemple 1 est agitée à 30°C avec un volume égal d'une phase organique ayant la composition en volume suivante:

- hydroxyquinoléine A: 8%
- n-décanol: 10%
- acide éthyl-2-hexyléthyl-2-hexylphosphonique (HEHEHP): 6%
- kérosène: 76%

Après séparation des phases, le taux d'extraction du gallium obtenu est donné dans le tableau 2 en fonction du temps de mélange.

*Tableau 2*

| Additif | Temps de mélange (min) | | | | |
|---|---|---|---|---|---|
| | 2 | 5 | 10 | 20 | 30 |
| HEHEHP 6% | 15 | 30 | 55 | 85 | 90 |

*Exemple 3:*

Une lessive Bayer de même composition que celle donnée dans l'exemple 1 est agitée à 26°C avec un volume égal d'une phase organique ayant la composition suivante:

- hydroxyquinoléine A: 8%
- n-décanol: 10%
- acide dioctylphosphinique (HDOP): 3%
- kérosène: 79%

Après séparation des phases, le taux d'extraction du gallium obtenu est donné dans le tableau 3 en fonction du temps de mélange.

*Tableau 3*

| Additif | Temps de mélange (min) | | | | |
|---|---|---|---|---|---|
| | 2 | 5 | 10 | 20 | 30 |
| HDOP 3% | 6 | 10 | 18 | 35 | 55 |

*Exemple 4:*

Cet exemple illustre également l'accroissement par rapport au procédé traditionnel de la vitesse d'extraction du gallium selon le procédé de l'invention lorsque l'on met en œuvre une autre hydroxyquinoléine ainsi qu'un mélange de mono- et diesters de l'acide phosphorique.

Une lessive Bayer de même composition que celle donnée dans l'exemple 1 est agitée à 30°C avec un volume égal d'une phase organique ayant la composition en volume suivante:

- hydroxyquinoléine B: 10%
- n-décanol: 10%
- acide tridécylphosphorique (mélange équimoléculaire de $H_2TDP$ et HDTDP): 6%
- kérosène: 74%

Après séparation des phases, le taux d'extraction du gallium est donné dans le tableau 4 en fonction du temps de mélange.

*Tableau 4*

*Taux d'extraction du gallium (%)*

| Additif | Temps de mélange (min) | | | | |
|---|---|---|---|---|---|
| | 2 | 5 | 10 | 20 | 30 |
| $H_2TDP$+HDTDP 6% | 10 | 25 | 45 | 72 | 87 |

B est une alkylhydroxyquinoléine de formule.

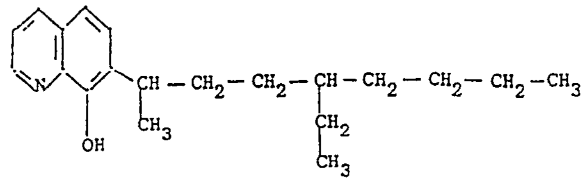

*Exemple 5:*

Une lessive Bayer de même composition que celle donnée dans l'exemple 1 est agitée à 26°C avec un volume égal de phase organique ayant la composition suivante:

- hydroxyquinoléine C: 8%
- n-décanol: 10%
- acide diéthyl-2-hexyldithiophosphorique (HDEHDTP): 6%
- kérosène: 76%

Après séparation des phases, le taux d'extraction du gallium est donné dans le tableau 5, en fonction du temps de mélange.

*Tableau 5*

*Taux d'extraction du gallium (%)*

| Additif | Temps de mélange (min) | | | | |
|---|---|---|---|---|---|
| | 2 | 5 | 10 | 20 | 30 |
| HDEHDTP 6% | 20 | 35 | 60 | 85 | 89 |

C est une α-alcénylhydroxyquinoléine de formule:

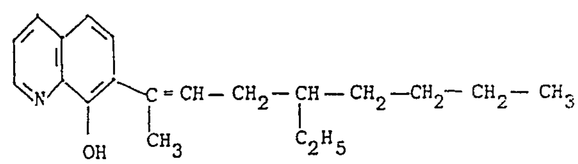

*Exemple 6:*

Une lessive Bayer de même composition que celle donnée dans l'exemple 1 est agitée à 26°C avec un volume égal de phase organique ayant la composition suivante:

- hydroxyquinoléine A: 8%
- n-décanol: 10%
- acide dioctyldithiophosphinique (HDODTP): 3%
- kérosène: 79%

Après séparation des phases, le taux d'extraction du gallium est donné dans le tableau 6, en fonction du temps de mélange.

*Tableau 6*

| Additif | Temps de mélange (min) | | | | |
|---|---|---|---|---|---|
| | 2 | 5 | 10 | 20 | 30 |
| HDODTP 3% | 10 | 22 | 33 | 56 | 75 |

## Revendications

1. Procédé d'extraction liquide/liquide du gallium contenu dans des solutions aqueuses basiques par mise en contact de la solution aqueuse avec une phase organique contenant principalement un solvant organique, au moins une hydroxyquinoléine substituée, caractérisé en ce que la phase organique contient en outre au moins un composé organophosphoré comportant au moins une fonction acide.

2. Procédé selon la revendication 1, caractérisé en ce que le composé organophosphoré est choisi parmi les composés de formule générale:

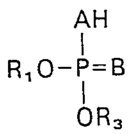 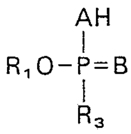 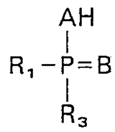

dans lesquelles $R_3$ représente $R_2$ ou l'hydrogène, et $R_1$ et $R_2$ sont des radicaux alkyles, alcényles, alicycliques, aryles ou alkylaryles comportant de 1 à 20 atomes de carbone, et A et B, qui peuvent être identiques ou différents, représentent un atome d'oxygène ou de soufre.

3. Procédé selon la revendication 2, caractérisé en ce que les radicaux $R_1$ et $R_2$ comportent de 5 à 15 atomes de carbone.

4. Procédé selon l'une des revendications 1 à 3, caractérisé en ce que le composé organophosphoré est choisi parmi les monoesters ou les diesters ou les mélanges de monoesters et de diesters des acides phosphoriques, phosphoniques, phosphiniques, thiophosphoriques, thiophosphoniques et thiophosphiniques.

5. Procédé selon l'une des revendications 1 à 4, caractérisé en ce que le composé organophosphoré est choisi parmi l'acide diéthyl-2-hexylphosphorique, l'acide tridécylphosphonique, l'acide éthyl-2-hexyléthyl-2-hexylphosphonique, l'acide dioctylphosphinique, l'acide diéthyl-2-hexyldithiophosphorique, l'acide dioctyldithiophosphinique.

6. Procédé selon l'une des revendications 1 à 5, caractérisé en ce que la proportion en composé organophosphoré est inférieure à 20% en volume rapportée à la phase organique.

7. Procédé selon la revendication 6, caractérisé en ce que la proportion en composé organophosphoré est inférieure à 10% en volume rapportée à la phase organique.

8. Procédé selon la revendication 1, caractérisé en ce que l'hydroxyquinoléine a pour formule:

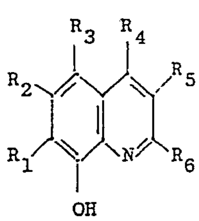

dans laquelle $R_1$, $R_2$, $R_3$, $R_4$, $R_5$, $R_6$, identiques ou différents, sont choisis parmi le groupe constitué par l'hydrogène, les halogènes, les radicaux alkyle, alcényle, alicyclique, aryle, $R_1$, $R_2$, $R_3$, $R_4$, $R_5$, $R_6$ ne pouvant représenter simultanément H.

9. Procédé selon la revendication 8, caractérisé en ce que l'hydroxyquinoléine est choisie parmi le groupe constitué par:

– les $\alpha$-alcénylhydroxy-8 quinoléines de formule générale:

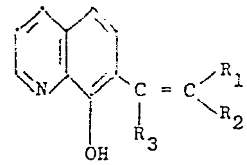

dans laquelle $R_1$, $R_2$ et $R_3$ représentent un hydrogène ou un groupement hydrocarboné contenant 1 à 12 atomes de carbone;

– les β-alcénylhydroxy-8 quinoléines de formule:

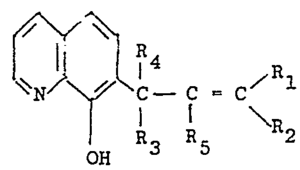

dans laquelle $R_1$, $R_2$, $R_3$, $R_4$, $R_5$ représentent un hydrogène ou un groupement hydrocarboné contenant 1 à 12 atomes de carbone;

– les alkylhydroxy-8 quinoléines de formule:

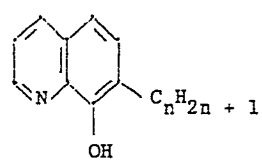

dans laquelle n est compris entre 1 et 20.

10. Procédé selon la revendication 1, caractérisé en ce que la proportion d'hydroxyquinoléine substituée dans la phase organique est comprise entre 1 et 50% en volume rapportée à la phase organique.

11. Procédé selon la revendication 10, caractérisé en ce que la proportion d'hydroxyquinoléine substituée dans la phase organique est comprise entre 6 et 12% en volume rapportée à la phase organique.

12. Procédé selon la revendication 1, caractérisé en ce que le solvant organique est choisi parmi le groupe comportant l'un au moins des diluants suivants: l'heptane, les coupes pétrolières du type kérosène, le benzène, le toluène, le xylène, les coupes aromatiques, le chloroforme, le tétrachlorure de carbone, le dichloroéthane et le trichloropropane.

13. Procédé selon la revendication 1, caractérisé en ce que l'on ajoute à la phase organique un agent modificateur choisi parmi le groupe comportant les corps à fonction alcool et les esters phosphoriques, les oxydes de phosphine, les sulfoxydes.

14. Procédé selon la revendication 13, caractérisé en ce que l'agent modificateur est choisi parmi

le groupe comportant les alcools dont le nombre d'atomes de carbone est compris entre 4 et 15 et le tributylphosphate.

15. Procédé selon l'une des revendications 1 à 14, caractérisé en ce que l'on opère en atmosphère inerte.

16. Procédé selon l'une des revendications 1 à 15, caractérisé en ce que, en outre, on opère la séparation de la phase organique de la phase aqueuse, qu'au moins une fois, d'une part, on met en contact la phase organique avec une solution d'acide fort, et, d'autre part, on sépare la phase organique restante de la phase aqueuse et qu'ensuite on récupère le gallium de la phase aqueuse.

17. Procédé selon la revendication 16, caractérisé en ce que l'acide est choisi parmi le groupe comprenant l'acide chlorhydrique, l'acide sulfurique, l'acide nitrique, l'acide bromhydrique, l'acide perchlorique.

## Patentansprüche

1. Verfahren zur Flüssig-Flüssig-Extraktion des in basischen wässerigen Lösungen enthaltenen Galliums durch in Kontaktbringen der wässerigen Lösung mit einer organischen Phase, die im wesentlichen ein organisches Lösungsmittel und wenigstens ein substituiertes Hydrochinolin, enthält, dadurch gekennzeichnet, dass die organische Phase ausserdem mindestens eine Organophosphorverbindung mit mindestens einer Säurefunktion enthält.

2. Verfahren nach Anspruch 1, dadurch gekennzeichnet, dass die Organophosphorverbindung unter den Verbindungen der allgemeinen Formel ausgewählt wird:

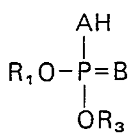 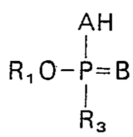 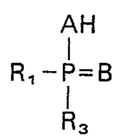

in denen $R_3$ Wasserstoff oder $R_2$ bedeutet, $R_1$ und $R_2$ Alkyl-, Alkenyl-, alicyclische, Aryl- oder Alkarylradikale mit 1 bis 20 Kohlenstoffatomen sind und A und B, die gleich oder verschieden sein können, ein Sauerstoff- oder Schwefelatom bedeuten.

3. Verfahren nach Anspruch 2, dadurch gekennzeichnet, dass die Reste $R_1$ und $R_2$ 5 bis 15 Kohlenstoffatome enthalten.

4. Verfahren nach einem der Ansprüche 1 bis 3, dadurch gekennzeichnet, dass die Organophosphorverbindung unter den Monoestern oder Diestern der Phosphor-, Phosphon-, Phosphin-, Thiophosphor-, Thiophosphon- und Thiophosphinsäuren ausgewählt wird.

5. Verfahren nach einem der Ansprüche 1 bis 4, dadurch gekennzeichnet, dass die Organophosphorverbindung ausgewählt wird unter der Diethyl-2-hexylphosphorsäure, Tridecylphosphonsäure, Ethyl-2-hexyl-ethyl-2-hexylphosphonsäure, Dioctylphosphinsäure, Diethyl-2-hexyldithiophosphorsäure und Dioctyldithiophosphinsäure.

6. Verfahren nach einem der Ansprüche 1 bis 5, dadurch gekennzeichnet, dass der Anteil an Organophosphorverbindung unter 20 Vol.-%, bezogen auf die organische Phase, liegt.

7. Verfahren nach Anspruch 6, dadurch gekennzeichnet, dass der Anteil an der Organophosphorverbindung unter 10 Vol.-%, bezogen auf die organische Phase, liegt.

8. Verfahren nach Anspruch 1, dadurch gekennzeichnet, dass das Hydroxychinolin die Formel besitzt:

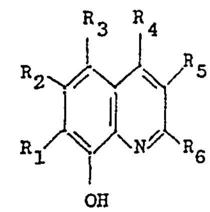

in der $R_1$, $R_2$, $R_3$, $R_4$, $R_5$ und $R_6$, die gleich oder verschieden sein können, ausgewählt sind aus der Gruppe von Wasserstoff, den Halogenen, den Alkyl-, Alkenyl-, alicyclischen und Arylradikalen, wobei $R_1$, $R_2$, $R_3$, $R_4$, $R_5$ und $R_6$ nicht gleichzeitig Wasserstoff sein können.

9. Verfahren nach Anspruch 8, dadurch gekennzeichnet, dass das Hydroxychinolin ausgewählt ist aus der Gruppe, die gebildet wird von:

– α-Alkenyl-8-hydroxy-chinolinen der allgemeinen Formel:

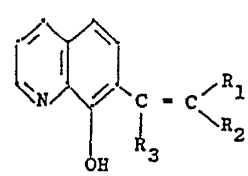

in der $R_1$, $R_2$ und $R_3$ Wasserstoff oder eine Kohlenwasserstoffgruppe mit 1 bis 12 Kohlenstoffatomen sein können,

– den β-Alkenyl-8-hydroxychinolinen der Formel:

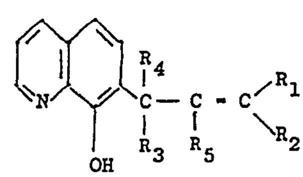

in der $R_1$, $R_2$, $R_3$, $R_4$ und $R_5$ Wasserstoff oder eine Kohlenwasserstoffgruppe mit 1 bis 12 Kohlenstoffatomen sein können,

– den Alkyl-8-hydroxychinolinen der Formel:

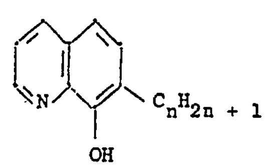

in der n zwischen 1 und 20 liegt.

10. Verfahren nach Anspruch 1, dadurch gekennzeichnet, dass der Anteil des substituierten Hydroxychinolins in der organischen Phase zwischen 1 und 50 Vol.-%, bezogen auf die organische Phase, beträgt.

11. Verfahren nach Anspruch 10, dadurch gekennzeichnet, dass der Anteil des substituierten Hydroxychinolins in der organischen Phase zwischen 6 und 12 Vol.-%, bezogen auf die organische Phase, beträgt.

12. Verfahren nach Anspruch 1, dadurch gekennzeichnet, dass das organische Lösungsmittel ausgewählt ist aus der Gruppe, die mindestens eines der folgenden Lösungsmittel enthält: Heptan, die Erdölschnitte des Kerosintyps, Benzol, Toluol, Xylol, die aromatischen Schnitte, Chloroform, Tetrachlorkohlenstoff, Dichlorethan und Trichlorpropan.

13. Verfahren nach Anspruch 1, dadurch gekennzeichnet, dass man zu der organischen Phase ein modifizierendes Mittel hinzusetzt, das ausgewählt wird aus der Gruppe, die die Stoffe mit Alkoholfunktion und die Ester der Phosphorsäure, die Phosphinoxide und die Sulfoxide umfasst

14. Verfahren nach Anspruch 13, dadurch gekennzeichnet, dass das Modifizierungsmittel ausgewählt wird aus der Gruppe, die die Alkohole mit 4 bis 15 Kohlenstoffatomen und Tributylphosphat umfasst.

15. Verfahren nach einem der Ansprüche 1 bis 14, dadurch gekennzeichnet, dass man in inerter Atmosphäre arbeitet.

16. Verfahren nach einem der Ansprüche 1 bis 15, dadurch gekennzeichnet, dass man die organische Phase von der wässerigen Phase trennt, das man mindestens einmal einesteils die organische Phase mit einer Lösung einer starken Säure in Kontakt bringt und zum anderen Teil die verbleibende organische Phase von der wässerigen Phase trennt, und dass man dann das Gallium aus der wässerigen Phase zurückgewinnt.

17. Verfahren nach Anspruch 16, dadurch gekennzeichnet, dass die säure ausgewählt wird aus der Gruppe, die Chlorwasserstoffsäure, Schwefelsäure, Salpetersäure, Bromwasserstoffsäure und Perchlorsäure umfasst.

## Claims

1. Process for liquid/liquid extraction of gallium present in basic aqueous solutions, by bringing into contact the aqueous solution with an organic phase principally containing an organic solvent and at least one substituted hydroxyquinoline, characterised in that the organic phase contains in addition at least one organophosphorus compound containing at least one acidic function.

2. Process according to Claim 1, characterised in that the organophosphorus compound is chosen from the compounds of general formula:

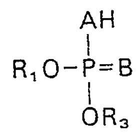
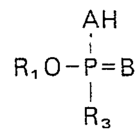
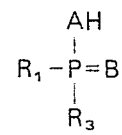

in which $R_3$ denotes $R_2$ or hydrogen, and $R_1$ and $R_2$ are alkyl, alkenyl, alicyclic, aryl or alkylaryl radicals containing 1 to 20 carbon atoms, and A and B, which can be identical or different, denote an oxygen or sulphur atom.

3. Process according to Claim 2, characterised in that the radicals $R_1$ and $R_2$ contain from 5 to 15 carbon atoms.

4. Process according to one of Claims 1 to 3, characterised in that the organophosphorus compound is chosen from the monoesters or diesters or mixtures of monoesters and diesters of phosphoric, phosphonic, phosphinic, thiophosphoric, thiophosphonic and thiophosphinic acids.

5. Process according to one of Claims 1 to 4, characterised in that the organophosphorus compound is chosen from diethyl-2-hexylphosphoric acid, tridecylphosphonic acid, ethyl-2-hexylethyl-2-hexylphosphonic acid, dioctylphosphinic acid, diethyl-2-hexyldithiophosphoric acid and dioctyldithiophosphinic acid.

6. Process according to any one of Claims 1 to 5, characterised in that the proportion of organophosphorus compound is less than 20% by volume with respect to the organic phase.

7. Process according to Claim 6, characterised in that the proportion of organophosphorus compound is less than 10% by volume with respect to the organic phase.

8. Process according to Claim 1, characterised in that the hydroxyquinoline is of the formula:

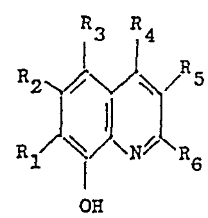

in which $R_1$, $R_2$, $R_3$, $R_4$, $R_5$ and $R_6$, which may be identical or different, are chosen from the group consisting of hydrogen, halogens, and alkyl, alkenyl, alicyclic and aryl radicals; $R_1$, $R_2$, $R_3$, $R_4$, $R_5$ and $R_6$ not being able to denote H simultaneously.

9. Process according to Claim 8, characterised in that the hydroxyquinoline is chosen from the group consisting of:

– α-alkenyl-8-hydroxyquinolines of general formula:

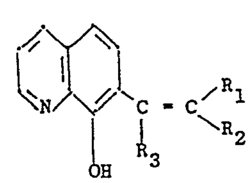

in which $R_1$, $R_2$ and $R_3$ denote a hydrogen or a hydrocarbon group containing 1 to 12 carbon atoms;

– β-alkenyl-8-hydroxyquinolines of formula:

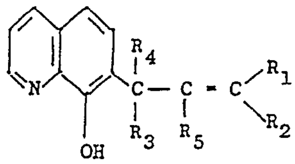

in which $R_1$, $R_2$, $R_3$, $R_4$ and $R_5$ denote a hydrogen or a hydrocarbon group containing 1 to 12 carbon atoms;

– alkyl-8-hydroxyquinolines of formula:

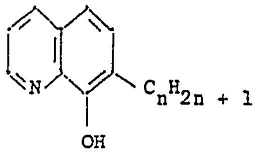

in which n is between 1 and 20.

10. Process according to Claim 1, characterised in that the proportion of substituted hydroxyquinoline in the organic phase is between 1 and 50% by volume with respect to the organic phase.

11. Process according to Claim 10, characterised in that the proportion of substituted hydroxyquinoline in the organic phase is between 6 and 12% by volume with respect to the organic phase.

12. Process according to Claim 1, characterised in that the organic solvent is chosen from the group comprising one or more of the following diluents: heptane, petroleum cuts of the kerosene type, benzene, toluene, xylene, aromatic cuts, chloroform, carbon tetrachloride, dichloroethane and trichloropropane.

13. Process according to Claim 1, characterised in that there is added to the organic phase a modifying agent chosen from the group comprising substances which possess an alcohol function and phosphoric esters, phosphine oxides and sulphoxides.

14. Process according to Claim 13, characterised in that the modifying agent is chosen from the group comprising alcohols in which the number of carbon atoms is between 4 and 15, and tributyl phosphate.

15. Process according to one of Claims 1 to 14, characterised in that the reaction is performed in an inerte atmosphere.

16. Process according to one of Claims 1 to 15, characterised in that, in addition, separation of the organic phase from the aqueous phase is carried out, in that at least once, on the one hand the organic phase is brought into contact with a solution of strong acid, and on the other hand the remaining organic phase is separated from the aqueous phase, and in that the gallium is then recovered from the aqueous phase.

17. Process according to Claim 16, characterised in that the acid is chosen from the group comprising: hydrochloric acid, sulphuric acid, nitric acid, hydrobromic acid and perchloric acid.